Europäisches Patentamt

(19) European Patent Office

Office européen des brevets

(11) Numéro de publication: **0 094 857**
**B1**

(12) **FASCICULE DE BREVET EUROPEEN**

(51) Int. Cl.⁴: **G 01 P 1/04**

(45) Date de publication du fascicule du brevet:
**19.03.86**

(21) Numéro de dépôt: **83400868.2**

(22) Date de dépôt: **29.04.83**

(54) **Dispositif capteur, notamment pour entraîner un compteur de bicyclette.**

(30) Priorité: **06.05.82 FR 8207912**

(43) Date de publication de la demande:
**23.11.83 Bulletin 83/47**

(45) Mention de la délivrance du brevet:
**19.03.86 Bulletin 86/12**

(84) Etats contractants désignés:
**BE DE GB IT LU NL**

(56) Documents cités:
**DE - A - 2 143 348**
**DE - A - 2 332 154**
**FR - A - 593 510**
**FR - A - 819 886**
**FR - A - 2 208 116**

(73) Titulaire: **HURET ET SES FILS Société dite:, 60 Avenue Félix Faure, F-92000 Nanterre (FR)**

(72) Inventeur: **Coue, Maurice, 6 Résidence du Vieux Puits, F-78810 Feucherolles (FR)**

(74) Mandataire: **Moncheny, Michel et al, c/o Cabinet Lavoix 2 Place d'Estienne d'Orves, F-75441 Paris Cedex 09 (FR)**

LIBER, STOCKHOLM 1986

## Description

La presente invention concerne les dispositifs utilises pour capter le mouvement d'un organe rotatif et transmettre ce mouvement à un appareil de mesure, tel qu'un compteur. Dans une application plus particulièrement visée, l'invention est utilisée pour capter le mouvement d'une roue d'un véhicule tel qu'une bicyclette ou analogue et l'appareil de mesure est un compteur de vitesse et/ou un totalisateur Kilométrique.

On connaît,par exemple grâce an document FR-A- 2 208 116, un dispositif capteur comprenant un support destiné à être fixé sur une partie fixé du véhicule et sur lequel sont montés: d'une part, un disque rotatif pourvu de moyens de liaison avec l'organe dont on désire détecter le mouvement et, d'autre part, une

tête de prise de mouvement reliée à l'appareil de mesure par un câble ou autre organe de transmission analogue. Les axes du disque et de la tâte de prise de mouvement sont en général perpendiculaires et il est prévu entre les deux un renvoi d'angle constitué par un pignon porté par la tête de prise de mouvement et qui engrène avec une denture ou des encoches portées par le disque.

Le rapport de démultiplication établi entre le disque et le pignon est choisi en fonction du diamètre de la roue à laquelle le dispositif est associé, de façon à obtenir une vitesse de rotation du câblé et par conséquent une indication du compteur qui correspondent à la vitesse effective du cycle et à la distancé effectivement parcourue. Il en résulté qu'il est nécessairé de prévoir pour chaque diamètré de roue un pignon différent et également un support différent étant donné que l'axe du pignon et de la tête deprise de mouvement du câble occupe une position à chaque fois différente. Il est donc nécessaire de fabriquer autant de supports que de types de roues, ce qui limite les séries et augmente les prix de revient; ceci a également pour conséquencé de compliquer les opérations de montage et de stockage puisqu'il est nécessaire de stocker autant de dispositifs capteurs que l'on peut monter de roues différentes.

Ce problème est encore aggravé par le fait que les compteurs étant prévus pour un sens d'entraînement déterminé, les capteurs sont en général montés du même côté de la roue. Si l'on désire pour des raisons d'implantation ou de commodité disposer le capteur du côté opposé de la roue, il faut prévoir des moyens d'inversion du sens de rotation, ces moyens étant en général constitués par un pignon intermédiaire, d'axe parallèle au premier pignon solidaire de la tête de prise de mouvement et interposé entre le disque rotatif et cepremier pignon. Cela nécessite de réaliser d'autres supports adaptés à cette configuration.

Le but de l'invention est par conséquent de fournir un dispositif capteur qui permette de remédier à ces inconvénients et qui puisse être utilisé moyennant une adaptation très simple à la fois sur des véhicules munis de roues de diamètres différents et indifféremment d'un côté ou de l'autre de la roue.

L'invention a donc pour objet un dispositif capteur du mouvement d'un organe rotatif tel qu'une roue, comprenant une platine-support en forme d'équerre sur une des branches de laquelle est monté rotatif un disque en prise avec l'organe rotatif et dont l'autre branche porte une pièce formant palier pour une tête de prise demouvement d'un câble de transmission ou organe analogue, des moyens de renvoi et de démultiplication étant prévus entre le disque et ladite tête de prise de mouvement, caractérisé en ce que le support et la pièce formant palier sont agencés pour pouvoir occuper plusieurs positions relatives différentes et il est prévu un jeu de moyens de renvoi et de démultiplication, correspondant aux diverses positions relatives du support et de la pièce formant palier.

Suivant d'autres caractéristiques:
- la platine-support comporte au moins une fente dans laquelle est engagée la pièce formant palier, la platine-support et la pièce comportant à cet effet des moyens complémentaires de guidage;
- la pièce formant palier comporte un corps de forme polygonale et un palier dont l'axe est situé à une distance différente par rapport à au moins certains des côtés du polygone;
- la pièce formant palier et les organes de renvoi et de démultiplication associés portent des repères.

L'invention va être décrite plus en détail cidessous en se référant au dessin annexé, donné uniquement à titre d'exemple et sur lequel:

la Fig. 1 est une vue en perspective éclatée et avec arrachement d'un dispositif suivant l'invention dans une première configuration;

la Fig. 2 est une vue de dessus de ce dispositif dans une configuration différente.

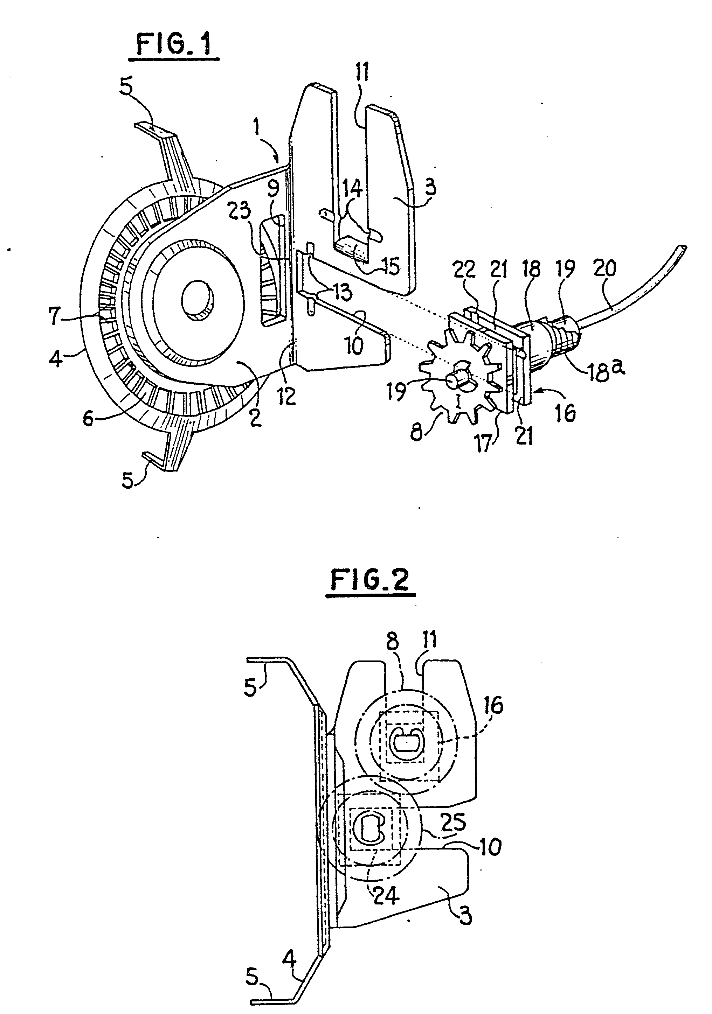

On voit sur la Fig. 1 un dispositif suivant l'invention comprenant un support 1 constitué par une ferrure métallique en forme d'équerre comprenant deux branches 2 et 3. Sur la première branche 2 est monté rotatif un disque 4 muni de deux pattes 5 qui sont destinées à venir en prise dans l'application considérée avec les rayons d'une roue (non représentée). Ce disque comporte une série d'encoches radiales 6 séparées par des rayons 7 et destinées à coopérer avec les dents d'un pignon 8 de renvoi et de démultiplication. A cet effet, la branche 2 comporte une fenêtre 9 pour le passage des dents de ce pignon.

Dans sa deuxième branche 3, le support comporte deux fentes 10, 11. La première fente 10 s'étend perpendiculairement à l'arête de jonction 12 entre les deux branches et la deuxième fente 11 de même largeur s'étend perpendiculairement à la première. Des crans 13, 14 sont prévus le long de chacun des bords des deux fentes, ces crans faisant saillie sur la face externe de la branche 3. Par ailleurs, une patte 15 découpée et repliée s'étend à partir du fond de la fente 11 en saillie sur la même face externe de la branche 3.

Le dispositif est complété par une pièce 16 moulée en matière plastique, qui comporte un corps 17 de forme à peu près parallélépipédique à partir duquel s'étend un fût 18 de forme cylindrique se terminant par une extrémité filetée 18ª. Cette pièce 16 constitue un palier pour une tète 19 de prise de mouvement adaptée pour porter à une extrémité le pignon 8 et pour être reliée à son extrémité opposée à l'extrémité adjacente d'un câble de transmission 20 maintenu par un organevissé sur l'extrémité 18ª.

Le corps parallélépipédique 17 comporte dans chacune de ses faces latérales une rainure 21 dont les dimensions sont telles que le corps peut être reçu à frottement dans les fentes 10 et 11, les rainures 21 faisant office de glissières pour les bords de ces fentes. Dans les faces internes des rainures 21 sont prévues des empreintes 22 destinées à coopérer avec les crans 13 ou 14.

Dans le mode de réalisation représenté, la position du fût 18 est choisie de telle façon que son axe se trouve situé à une distance différente de chacune des quatre faces latérales du corps de forme parallélépipédique et que chacune de ces distances corresponde à un pignon 8 de diamètre et de nombre de dents différents.

Par ailleurs, des repères sont prévus sur chacune des faces latérales du corps, ces repères pouvant être constitués par des traits respectivement I, II, III ou IIII, des chiffres 1, 2, 3, 4, des lettres A, B, C, D, des couleurs ou tout autre repère convenable. Des repères analogues sont prévus sur chacun des pignons pouvant être utilisés dans cet agencement.

L'utilisation d'un dispositif capteur suivant l'invention est la suivante: dans la construction représentée, la pièce 16 formant palier est prévue pour pouvoir être montée dans quatre positions différentes dans l'encoche 10 du support 1, en étant associée avec l'un ou l'autre de quatre pignons comprenant 12, 13, 14 ou 16 dents. Ces pignons correspondent respectivement à des développements de roue de 2,2 m, 2 m, 1,9 m, 1,6 m. Suivant le type de roue utilisé, on monte sur la pièce 16 formant palier le pignon 8 correspondant et l'on monte cette pièce formant palier dans la position correcte sur le support, pour que le pignon choisi engrène avec le disque 4. Cette position est bien entendu choisie au moyen des repères portés par le corps et la position de ce corps par rapport au support est déterminée par sa venue en butée contre la partie adjacente 23 de la première branche 2 du support. Par ailleurs, les crans 13 et les empreintes 22 assurent le maintien de la pièce 16 par rapport au support.

Si le dispositif est monté du côté habituel ou normal de la roue, la pièce formant palier est engagée dans la fente 10 (Fig. 1). Par contre, si le dispositif capteur est monté de l'autre côté de la roue, on met tout d'abord en place une deuxième pièce 24, formant palier, munie également de rainures, que l'on engage dans la fente 10. Cette pièce 24 est de construction très simpléet supporte simplement à rotation un pignon intermédiaire 25 de caractéristiques convenables. Puis on met en place dans la deuxième fente 11 la pièce 16, dans la position correspondant au type de roue choisi, comme cela été expliqué ci-dessus. La pièce 16 vient alors en butée contre la patte 15.

Cette deuxième configuration est représentée sur la Fig. 2.

La description qui précède montre bien que le but recherché a été atteint: en effet, l'ensemble constitué par le support métallique 1 et le disque 4 peut être utilisé pour plusieurs diamètres de roues et d'un côté ou de l'autre de ces roues. Il en est de même de la pièce 16 formant palier, les seules pièces variant d'un dispositif à l'autre étant constituées par les pignons 8 ou les couples de pignons 8, 25. Ceci permet de ne fabriquer qu'un seul support, en très grande série et par conséquent avec un prix de revient plus faible. Le nombre de pièces à stocker est également considérablement réduit, sans que le montage soit pour autant compliqué puisqu'il suffit simplement de repérer la position du corps par rapport à son support, en fonction des caractéristiques du pignon qu'il porte.

Bien entendu, des variantes de réalisation peuvent être envisagées en particulier, le corps 17 peut avoir une forme différente et occuper un nombre différent de positions par rapport au support. Les moyens de montage de cette pièce sur le support peuvent également être différents de ceux qui ont été décrits ci-dessus: le support peut par exemple délimiter des rainures, le long des fentes 10, 11, pour recevoir la pièce 16 dont les bords seraient pleins. Les fentes recevant les pièces 16 et 24 peuvent elles-mêmes être remplacées par des moyens de montage équivalents.

**Revendications:**

1.- Dispositif capteur du mouvement d'un organe rotatif tel qu'une roue, comprenant une platine-support (1) en forme d'équerre sur une des branches (2) de laquelle est monté rotatif un disque (4) en prise avec l'organe rotatif et dont l'autre branche (3) porte une pièce (16) formant palier pour une tête (19) de prise de mouvement d'un câble de transmission (20) ou organe analogue, des moyens de renvoi et de démultiplication (8) étant prévus entre le disque (4) et ladite pièce (19) de prise de mouvament, caractérisé en ce que la platine-support (1) et la pièce (16) formant palier sont agencés pour pouvoir occuper plusieurs positions relatives différentes et qu'il est prévu un jeu de moyens de renvoi et de démultiplication (8), correspondant aux diverses positions relatives de la platinesupport (1) et de la pièce (16) formant palier.

2.- Dispositif capteur suivant la revendication 1, caractérisé en ce que la platine-support (1) comporte au moins une fente (10, 11) dans laquelle est engagée la pièce (16) formant palier, la platine-support (1) et la pièce (16) formant palier comportant à cet effet des moyens complémentaires de guidage (10, 11, 21).

3.- Dispositif capteur suivant la revendication 1, caractérisé en ce que la platine-support (1) et la pièce (16) formant palier comportent des moyens complémentaires de butée.

4.- Dispositif capteur suivant la revendication 1, caractérisé en ce que la platine-support (1) et la pièce (16) formant palier comportent des moyens complémentaires de retenue (13, 14, 22).

5.- Dispositif capteur suivant la revendication 1, caractérisé en ce que la pièce (16) formant palier comporte un corps (17) de forme polygonale et un palier dont l'axe est situé à une distance différente par rapport à au moins certains des côtés dudit corps (17).

6.- Dispositif capteur suivant la revendication 5, caractérisé en ce que le corps (17) comporte dans ses côtés des rainures (21) coopérant avec les bords des fentes (10, 11).

7.- Dispositif capteur suivant l'une quelconque des revendications 1 à 6, caractérisé en ce que la pièce (16) formant palier et les organes de renvoi et de démultiplication associés (8) portent des repères.

8.- Dispositif capteur suivant la revendication 2, caractérisé en ce que la platine-support (1) comporte deux fentes (10, 11) orientées perpendiculairement l'une par rapport à l'autre.

9.- Dispositif capteur suivant la revendication 3, caractérisé en ce que les moyens de butée prévus sur la platine-support (1) sont constitués par la branche (2) portant le disque (4).

10.- Dispositif capteur suivant la revendication 3, caractérisé en ce que les moyens de butée prévus sur la platine-support (1) sont constitués par une patte repliée (15) s'étendant à partir du fond d'une fente (11).

11.- Dispositif capteur suivant la revendication 4, caractérisé en ce que les moyens de retenue sont constitués par des organes respectivement mâles et femelles (13, 14, 22) prévus sur la platine-support (1) et la pièce (16) formant palier.


**Patentansprüche**

1. Sensorvorrichtung zur Erfassung der Bewegung eines rotierbaren Organs, z.B. eines Rades,

mit einer Trägerplatine (1) in Form eines Winkelstücks, an dessen einem Schenkel (2) eine mit dem rotierbaren Organ in Eingriff stehende Scheibe (4) drehbar montiert ist, und dessen anderer Schenkel (3) ein Teil (16) trägt, das ein Lager für den Bewegungsaufnahmekopf (19) eines Transmissionskabels (20) oder eines ähnlichen Organs bildet,

sowie mit zwischen der Scheibe (4) und dem genannten Bewegunggsaufnahmekopf (19) angeordneten Umlenk- und Untersetzungsmitteln (9),

dadurch gekennzeichnet, daß die Trägerplatine (1) und das das Lager bildende Teil (16) derart ausgebildet sind, daß sie mehrere verschiedene Relativpositionen einnehmen können,

und daß eine Satz von mehreren, den verschiedenen Relativpositionen der Trägerplatine (1) und des das Lager bildenden Teils (16) entsprechenden Umlenk- und Untersetzungsmitteln (8) vorgesehen ist.

2. Sensorvorrichtung nach Anspruch 1, dadurch gekennzeichnet, daß die Trägerplatine (1) wenigstens einen Schlitz (10, 11) aufweist, mit dem das das Lager bildende Teil (16) in Eingriff steht, wobei die Trägerplatine (1) und das das Lager bildende Teil (16) entsprechende komplementäre Führungsmittel besitzen.

3. Sensorvorrichtung nach Anspruch 1, dadurch gekennzeichnet, daß die Trägerplatine (1) und das das Lager bildende Teil (16) komplementäre Anschlagmittel besitzen.

4. Sensorvorrichtung nach Anspruch 1, dadurch gekennzeichnet, daß die Trägerplatine (1) und das das Lager bildende Teil (16) komplementäre Haltemittel (13, 14, 22) besitzen.

5. Sensorvorrichtung nach Anspruch 1, dadurch gekennzeichnet, daß das das Lager bildende Teil (16) einen polygonalen Körper (17) sowie ein Lager besitzt, dessen Achse zu zumindest einigen der Seiten des Körpers (17) unterschiedliche Abstände hat.

6. Sensorvorrichtung nach Anspruch 5, dadurch gekennzeichnet, daß in den Seiten des Körpers (17) Nuten (21) vorgesehen sind, die mit den Rändern der Schlitze (10, 11) zusammenwirken.

7. Sensorvorrichtung nach einem der Ansprüche 1 bis 6, dadurch gekennzeichnet, daß das das Lager bildende Teil (16) und die zugeordneten Umlenk- und Untersetzungsmittel (8) Paßmarken tragen.

8. Sensorvorrichtung nach Anspruch 2, dadurch gekennzeichnet, daß die Trägerplatine (1) zwei senkrecht zueinander angeordnete Schlitze (10, 11) besitzt.

9. Sensorvorrichtung nach Anspruch 3, dadurch gekennzeichnet, daß die an der Trägerplatine (1) vorgesehenen Anschlagmittel von dem die Scheibe tragenden Schenkel (2) gebildet sind.

10. Sensorvorrichtung nach Anspruch 3, dadurch gekennzeichnet, daß die an der Trägerplatine (1) vorgesehenen Anschlagmittel von einem abgewinkelten Lappen (15) gebildet sind, der vom Grund eines Schlitzes (11) ausgeht.

11. Sensorvorrichtung nach Anspruch 4, dadurch gekennzeichnet, daß die Haltemittel von an der Trägerplatine (1) und dem das Lager bildenden Teil (16) vorgesehenen zueinander komplementären Organen (13, 14, 22) gebildet sind.

## Claims

A device for detecting motion of a rotary element such as a wheel, comprising an L-shaped support bracket (1) having two branches, on one (2) of which a disc (4) is rotatably mounted for drivenly engaging the rotary element and the second branch (3) supporting a member (16) constituting a bearing means for mounting a motion take-off head (20) of a transmission cable or similar means, counter-transmission and speed-changing means (8) being interposed between the disc (4) and said motion take-off head, (19) characterized in that the support-bracket (1) and the member constituting a bearing are adapted to occupy a plurality of different relative positions, and there is provided a set of counter-transmission and speed-changing means (8), which correspond to the various relative positions of the support bracket (1) and the member (16) constituting a bearing.

2. A detecting device according to claim 1, characterized in that the support-bracket (1) comprises at least one slot (10, 11) in which slot the member (16) constituting a bearing is engaged, the support bracket (1) and the member (16) constituting a bearing having for this purpose complementary guide means (10, 11, 21).

3. A detecting device according to claim 2, characterized in that the support-bracket (1) and the member (16) constituting a bearing comprise complementary abutment means.

4. A detecting device according to claim 1, characterized in that the support-bracket (1) and the member (16) constituting a bearing have complementary retaining means (13, 14, 22).

5. A detecting device according to claim 1, characterized in that the member (16) constituting a bearing has a body (17) of polygonal shape and a bearing portion whose axis is located at a different distance from at least some of the sides of the body (17).

6. A detecting device according to claim 5, characterized in that the body (17) comprises in its sides grooves (21) which cooperate with the edges of the slots (10, 11).

7. A detecting device according to any one of the claims 1 to 6, characterized in that the member (16) constituting a bearing and the counter-transmission and speed-changing means (8) associated therewith carry index means.

8. A detecting device according to claim 2, characterized in that the support-bracket (1) has two slots (10, 11) which are oriented perpendicularly to each other.

9. A detecting device according to claim 3, characterized in that the abutment means provided on the support bracket (1) are formed by the branch (2) carrying the disc (4).

10. A detecting device according to claim 3, characterized in that the abutment means provided on the support bracket (1) are formed by a bent tab (15) which extends from the bottom of the slot (11).

11. A detecting device according to claim 4, characterized in that the retaining means comprise respectively male and female means (13, 14, 22) provided on the support bracket (1) and the member (16) constituting a bearing.

## FIG. 1

## FIG. 2